# EUROPÄISCHE PATENTSCHRIFT

(11) **EP 1 850 976 B1**
(45) Veröffentlichungstag und Bekanntmachung des Hinweises auf die Patenterteilung: **15.10.2008**
(21) Anmeldenummer: 06706219.0
(22) Anmeldetag: 13.01.2006
(51) Int. Cl.: B08B 3/02, F04B 1/12, F04B 1/14, F04B 53/18, F04B 17/03

(54) **HOCHDRUCKREINIGUNGSGERÄT**
HIGH-PRESSURE CLEANING DEVICE
APPAREIL DE NETTOYAGE HAUTE PRESSION

(30) Priorität: 21.02.2005 DE 102005009311
(43) Veröffentlichungstag der Anmeldung: 07.11.2007
(73) Patentinhaber: Alfred Kärcher GmbH & Co. KG, 71364 Winnenden (DE)
(72) Erfinder: WESCH, Georg, 73663 Berglen (DE); MÜLLER, Wolfgang, 73630 Remshalden- Geradstetten (DE)
(74) Vertreter: Hoeger, Stellrecht & Partner Patentanwälte
(86) Internationale Anmeldenummer: PCT/EP2006/000254
(87) Internationale Veröffentlichungsnummer: WO 2006/087055

(56) Entgegenhaltungen:
- EP-A- 0 503 298
- EP-A- 1 384 529
- DE-U1- 29 604 364
- DE-U1- 29 723 942
- US-A- 6 092 998

## Beschreibung

Die Erfindung betrifft ein Hochdruckreinigungsgerät mit einer Motorpumpeneinheit, umfassend einen Pumpenkopf, auf den ein Kolbenaggregat aufgesetzt ist, auf dem unter Zwischenschaltung eines Planetengetriebes ein Antriebsmotor aufsitzt, wobei das Kolbenaggregat mehrere in Längsrichtung der Motorpumpeneinheit hin und her bewegbare Kolben aufweist, die jeweils in einen Pumpraum des Pumpenkopfes eintauchen, sowie eine Taumelscheibeneinheit, die mit den Kolben zusammenwirkt, und wobei das Planetengetriebe ein drehfest mit der Motorwelle des Antriebsmotors verbundenes Sonnenrad aufweist, das über mehrere, an einem Planetenträger drehbar gelagerte Planetenräder mit einem Hohlrad gekoppelt ist, wobei der Planetenträger drehfest mit der Taumelscheibeneinheit verbunden ist.

Mittels derartiger Hochdruckreinigungsgeräte kann eine Reinigungsflüssigkeit, vorzugsweise Wasser, unter Druck gesetzt und auf eine zu reinigende Fläche gerichtet werden. Hierzu wird die Taumelscheibeneinheit vom Antriebsmotor in Drehung versetzt, und die mit der Taumelscheibeneinheit zusammenwirkenden Kolben werden zu einer Hin- und Herbewegung angeregt, so dass Reinigungsflüssigkeit in die Pumpräume des Pumpenkopfes eingesaugt und anschließend unter hohem Druck abgegeben werden kann. In der Betriebsstellung des Hochdruckreinigungsgeräts sind der Antriebsmotor, das Kolbenaggregat und der Pumpenkopf, die gemeinsam eine Motorpumpeneinheit ausbilden, üblicherweise horizontal ausgerichtet. Dadurch kann auf konstruktiv einfache Weise sichergestellt werden, dass insbesondere das Planetengetriebe zur Schmierung mit Öl versorgt werden kann.

Aus der US-A 6 092 998 ist ein Hochdruckreinigungsgerät bekannt, bei dem die Motorpumpeneinheit in der Betriebsstellung vertikal ausgerichtet ist. Die Motorpumpeneinheit ist allerdings einfach ausgestaltet, indem die Motorwelle direkt mit der Taumelscheibeneinheit gekoppelt ist ohne Zwischenschaltung eines Planetengetriebes.

Dokument DE 296 04 364 U offenbart ein Hochdruchreinigungsgerät gemäß dem Oberbegriff des Anspruchs 1.

Aufgabe der vorliegenden Erfindung ist es, ein Hochdruckreinigungsgerät der eingangs genannten Art derart weiterzubilden, dass das Planetengetriebe gut geschmiert werden kann auch bei im Wesentlichen vertikal ausgerichteter Motorpumpeneinheit.

Diese Aufgabe wird bei einem Hochdruckreinigungsgerät der gattungsgemäßen Art erfindungsgemäß dadurch gelöst, dass das Kolbenaggregat einen Ölsumpf aufweist, in den ein koaxial zur Motorwelle ausgerichtetes Ölförderrohr eintaucht, das drehfest mit dem Planetenträger verbunden ist, wobei Öl aus dem Ölsumpf über das Ölförderrohr dem Planetengetriebe zuführbar ist.

Der Einsatz des drehfest mit dem Planetenträger verbundenen und koaxial zur Motorwelle ausgerichteten Ölförderrohrs ermöglicht es auf konstruktiv einfache Weise, Öl aus dem Ölsumpf über das zusammen mit dem Planetenträger um seine Längsachse rotierende Ölförderrohr zum Planetengetriebe zu fördern, so dass dieses trotz vertikaler Ausrichtung der Motorpumpeneinheit mit Öl aus dem Ölsumpf geschmiert wird. Das Öl kann über das Ölförderrohr beispielsweise dem Sonnenrad zugeführt und ausgehend vom Sonnenrad über die Planetenräder im gesamten Planetengetriebe verteilt werden. Die Verteilung des Öls wird durch die während des Betriebes des Hochdruckreinigungsgeräts vorliegenden starken Zentrifugalkräfte unterstützt.

Das Ölförderrohr ist bei einer bevorzugten Ausgestaltung als Hülse ausgebildet, die in den Planetenträger eingesetzt ist, beispielsweise kann die Hülse in den Planetenträger eingepresst sein. Der Innendurchmesser der Hülse kann derart gewählt werden, dass das in die Hülse einströmende Öl Kapillarkräften unterliegt, die sicherstellen, dass das Öl aus dem Ölsumpf innerhalb der Hülse nach oben gezogen wird in Richtung Planetengetriebe.

Bei einer vorteilhaften Ausführungsform ist die Hülse mit dem Planetenträger verrastbar. Die Montage der Motorpumpeneinheit wird dadurch vereinfacht. Es kann zum Beispiel vorgesehen sein, dass an der Hülse Rasthaken angeordnet sind, die eine Rastfläche des Planetenträgers hintergreifen. An der Hülse können auch Rastaufnahmen angeordnet sein, in die Rastelemente des Planetenträgers einrasten.

Bevorzugt ist die Hülse in einen Hohlzapfen des Planetenträgers eingesetzt, beispielsweise eingepresst und/oder mit diesem verrastet. Am Hohlzapfen kann ein Taumelkörper der Taumelscheibeneinheit drehfest gehalten sein, an dem eine schräg zur Längsachse der Motorpumpeneinheit ausgerichtete Taumelscheibe gelagert ist, an der die Kolben mit ihren der Kolbenpumpe abgewandten Enden anliegen.

Die Hülse ist vorzugsweise aus Kunststoff gefertigt.

Von Vorteil ist es, wenn sich der Innendurchmesser des Ölförderrohrs in der dem Ölsumpf abgewandten Richtung erweitert. So kann beispielsweise vorgesehen sein, dass das Ölförderrohr zumindest eine Stufe ausbildet, über die sich der Innendurchmesser des Ölförderrohrs erweitert.

Besonders günstig ist es, wenn sich der Innendurchmesser des Ölförderrohrs zumindest in einem Längsabschnitt konisch erweitert. Hierbei ist ein Konuswinkel von etwa 5° bis circa 10°, insbesondere ein Konuswinkel von etwa 7° bis 9° besonders vorteilhaft, um eine zuverlässige Versorgung des Planetengetriebes mit Öl aus dem Ölsumpf trotz vertikaler Ausrichtung der Motorpumpeneinheit sicherzustellen.

Bei einer bevorzugten Ausführungsform der Erfindung weist das Ölförderrohr an seinem in den Ölsumpf eintauchenden unteren Endbereich einen sich in die dem Ölsumpf abgewandte Richtung konisch verjüngenden Eintrittsabschnitt auf. Hierbei ist es günstig, wenn sich an den Eintrittsabschnitt ein Mittelabschnitt mit gleichbleibendem Innendurchmesser des Ölförderrohrs anschließt, an den sich wiederum ein sich konisch erweiternder Ausgangsabschnitt anschließt, der sich bis an die dem Ölsumpf abgewandte Stirnseite des Ölförderrohrs erstreckt. Die Länge des Austrittsabschnitts kann ungefähr so groß sein wie die Länge des Mittelabschnitts, wohingegen der Eintrittsabschnitt bedeutend kürzer gewählt sein kann, insbesondere kann vorgesehen sein, dass die Länge des Eintrittsabschnitts allenfalls etwa ein Zehntel der Länge des Austrittsabschnitts entspricht.

Von besonderem Vorteil ist es, wenn das Ölförderrohr an einem dem Ölsumpf abgewandten oberen Endbereich eine Ölzerstäubungseinrichtung aufweist. Mittels der Ölzerstäubungseinrichtung kann das aus dem Ölsumpf geförderte Öl in sehr kleine Tröpfchen zerteilt und dann chaotisch im Planetengetriebe verteilt werden. Dadurch kann die Schmierung des Planetengetriebes verbessert werden.

Die Ölzerstäubungseinrichtung weist bevorzugt mehrere von der dem Ölsumpf abgewandten oberen Stirnseite des Ölförderrohrs abstehende Zähne auf. Die Zähne können scharfkantig ausgestaltet sein. Vorzugsweise sind die Zähne in Umfangsrichtung des Ölförderrohrs ungleichmäßig über dessen obere Stirnseite verteilt. So kann beispielsweise vorgesehen sein, dass zwischen den Zähnen in die obere Stirnseite des Ölförderrohrs eingeformte Nuten verlaufen, die senkrecht zur Längsachse des Ölförderrohrs ausgerichtet sind, wobei vorzugsweise zwei Nuten parallel zueinander angeordnet sind.

Vorzugsweise bildet zumindest ein Zahn ein Rastelement aus, das mit dem Planetenträger zusammenwirkt. Der mindestens eine als Rastelement ausgestaltete Zahn ermöglicht auf konstruktiv einfache Weise eine Rastverbindung zwischen dem Ölförderrohr und dem Planetenträger über die Ölzerstäubungseinrichtung. Es kann beispielsweise vorgesehen sein, dass der mindestens eine Zahn ein Rasthaken ausbildet, der ein Mittelteil des Planetenträgers hintergreift.

Die Zerstäubung des aus dem Ölsumpf geförderten Öls wird bei einer vorteilhaften Ausführungsform dadurch verbessert, dass die Ölzerstäubungseinrichtung zumindest einen koaxial zur Längsachse des Ölförderrohrs verlaufenden Schlitz aufweist, der in die dem Ölsumpf abgewandte obere Stirnseite des Ölförderrohrs einmündet. Vorzugsweise weist das Ölförderrohr mehrere in Umfangsrichtung ungleichmäßig verteilte Schlitze auf. Von besonderem Vorteil ist es, wenn die Schlitze in einen sich in die dem Ölsumpf abgewandte Richtung konisch erweiternden Austrittsabschnitt des Ölförderrohrs eingeformt sind, wobei die Länge der Schlitze ungefähr einem Viertel bis etwa der Hälfte der Länge des Austrittsabschnitts entspricht.

Die Ölzerstäubungseinrichtung kann einstückig mit dem Ölförderrohr verbunden sein. Alternativ kann vorgesehen sein, dass die Ölzerstäubungseinrichtung als separates Bauteil ausgestaltet ist, das auf der oberen Stirnseite des Ölförderrohr aufsitzt.

Wie bereits erläutert, kann das Ölförderrohr als Hülse ausgestaltet sein, die in den Planetenträger eingesetzt ist. Alternativ kann vorgesehen sein, dass das Ölförderrohr einstückig mit dem Planetenträger verbunden ist, indem es als koaxial zur Motorwelle ausgerichteter und in den Ölsumpf eintauchender Hohlschaft des Planetenträgers ausgestaltet ist. Bei einer derartigen Ausführungsform erstreckt sich der Planetenträger mit dem Hohlschaft bis in den Ölsumpf des Kolbenaggregates, so dass über den Hohlschaft Öl aus dem Ölsumpf direkt in den Bereich des Planetengetriebes überführt werden kann.

Hierbei ist es von besonderem Vorteil, wenn der Hohlschaft zumindest eine Fördereinrichtung aufweist zur Förderung von Öl aus dem Ölsumpf. Dies ermöglicht es, den Hohlschaft mit einem verhältnismäßig großen Innendurchmesser auszugestalten, der an sich zur Folge hat, dass auf das Öl einwirkende Kapillarkräfte reduziert werden. Um dennoch eine ausreichende Schmierung des Planetengetriebes sicherzustellen, kommt zumindest eine Fördereinrichtung zum Einsatz, die Öl aus dem Ölsumpf über den Hohlschaft zum Planetengetriebe überführt.

Die Fördereinrichtung kann beispielsweise zumindest eine innenseitig in den Hohlschaft eingeformte schraubenlinienförmige Nut aufweisen. Vorzugsweise kommen zwei schraubenlinienförmige Nuten zum Einsatz, die sich ausgehend von der dem Ölsumpf zugewandten unteren Stirnseite bis zu der dem Ölsumpf abgewandten oberen Stirnseite des Hohlschaftes erstrecken. In die Nuten einströmendes Öl wird vom rotierenden Hohlschaft über die Nuten bis zur oberen Stirnseite des Hohlschaftes angehoben, von der aus das Öl aufgrund der einwirkenden Zentrifugalkraft innerhalb des Planetengetriebes verteilt wird.

Die nachfolgende Beschreibung bevorzugter Ausführungsformen der Erfindung dient im Zusammenhang mit der Zeichnung der näheren Erläuterung. Es zeigen:
- Figur 1:: eine Seitenansicht eines Hochdruckreinigungsgerätes mit im Wesentlichen vertikal ausgerichteter Motorpumpeneinheit;
- Figur 2:: eine teilweise geschnittene Seitenansicht der Motorpumpeneinheit aus Figur 1;
- Figur 3:: eine vergrößerte Schnittdarstellung eines Teilbereichs der Motorpumpeneinheit aus Figur 2 gemäß einer ersten Ausführungsform der Erfindung;
- Figur 4:: eine Schnittansicht einer alternativen Ausgestaltung einer bei der Ausführungsform gemäß Figur 3 zum Einsatz kommenden Hülse und
- Figur 5:: eine vergrößerte Schnittdarstellung entsprechend Figur 3 einer weiteren Ausführungsform der Erfindung.

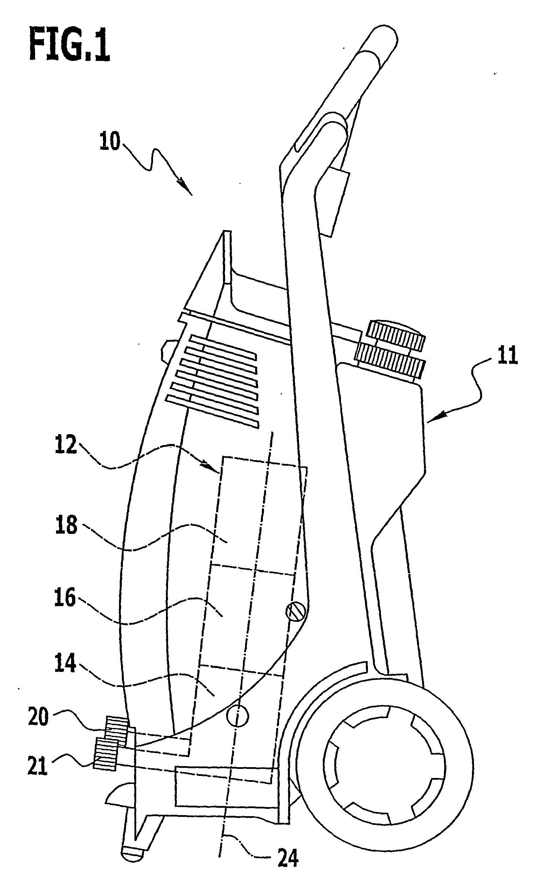

In Figur 1 ist schematisch ein Hochdruckreinigungsgerät 10 dargestellt mit einem Gehäuse 11, das eine im Wesentlichen vertikal ausgerichtete Motorpumpeneinheit 12 umgibt. Die Motorpumpeneinheit 12 umfasst einen Pumpenkopf 14, auf dem ein Kolbenaggregat 16 aufsitzt, das wiederum einen Antriebsmotor 18 trägt.

Der Pumpenkopf 14 weist einen Sauganschluss 20 und einen Druckanschluss 21 auf. An den Sauganschluss 20 kann eine Reinigungsmittelzuleitung angeschlossen werden, über die das Hochdruckreinigungsgerät 10 mit Reinigungsmittel, vorzugsweise Wasser, versorgt werden kann. An den Druckanschluss 21 kann eine Hochdruckleitung angeschlossen werden, an deren dem Hochdruckreinigungsgerät 10 abgewandtem Ende beispielsweise eine Sprühlanze angeordnet sein kann zum Auftragen von unter Druck gesetzter Reinigungsflüssigkeit auf eine zu reinigende Fläche.

Das Kolbenaggregat 16 weist mehrere Kolben 23 auf, die parallel zur Längsachse 24 der Motorpumpeneinheit 12 ausgerichtet sind und mit ihrem dem Pumpenkopf zugewandten unteren Ende jeweils in einen Pumpraum 25 des Pumpenkopfes 14 eintauchen. Mit ihrem dem Pumpenkopf 14 abgewandten oberen Ende liegen die Kolben 23 an einer Taumelscheibe 27 einer Taumelscheibeneinheit 28 an. Die Taumelscheibe 27 ist schräg zur Längsachse 24 ausgerichtet und an einem Taumelkörper 29 gelagert. Der Taumelkörper 29 wird vom Antriebsmotor 28 über ein Planetengetriebe 31 um die Längsachse 24 in Drehung versetzt. Das Planetengetriebe 31 umfasst ein Sonnenrad 32, das um die Längsachse 24 drehbar ist und drehfest an einer Motorwelle 34 des Antriebsmotors 18 festgelegt ist. Das Sonnenrad 32 kämmt mit Planetenrädern 36, 38, die jeweils drehbar an einem hohlen Tragzapfen 37 bzw. 39 eines drehbaren Planetenträgers 41 gehalten sind und mit einem Hohlrad 43 kämmen. Die Tragzapfen 37, 39 sind einstückig mit einem topfförmigen Mittelteil 45 des Planetenträgers 41 verbunden, an dessen Bodenwand 46 sich einstükkig, den Tragzapfen 37, 39 abgewandt ein koaxial zur Längsachse 24 ausgerichteter zylindrischer Hohlzapfen 47 anschließt, der sich bis in Höhe der Taumelscheibe 27 erstreckt. Am Hohlzapfen 47 ist der Taumelscheibenkörper 29 drehfest gehalten.

Während des Betriebes des Hochdruckreinigungsgerätes 10 wird die Drehbewegung der Motorwelle 34 über das Sonnenrad 32 auf die Planetenräder 36, 37 übertragen und dadurch der Planetenträger 41 und der an diesem festgelegte Taumelkörper 29 in Drehung versetzt. Die Drehbewegung des Taumelkörpers 29 führt zu einer Taumelbewegung der Taumelscheibe 27. Dies hat zur Folge, dass die Kolben 23, die mittels Druckfedern 49 in Richtung der Taumelscheibe 27 vorgespannt sind, eine parallel zur Längsachse 24 ausgerichtete Hin- und Herbewegung ausführen, so dass Reinigungsflüssigkeit in den jeweiligen Pumpraum 25 eingesaugt und anschließend unter Druck gegeben werden kann.

Das Kolbenaggregat 16 weist ein Gehäuse 51 auf mit einem zylinderförmigen Gehäusemantel 52, der auf einen von den Kolben 23 durchgriffenen Gehäuseboden 53 aufgesetzt ist und eine Gehäusedecke 54 trägt. An die Gehäusedekke schließt sich einstückig ein Kragen 55 an, welcher innenseitig das Hohlrad 43 aufweist. Die Gehäusedecke 54 umfasst eine Durchgangsöffnung 56, die vom Planetenträger 41 durchgriffen ist.

Der Gehäuseboden 53 und der Gehäusemantel 52 definieren einen mit Öl gefüllten Ölraum, einen sogenannten Ölsumpf 58, der sich in vertikaler Richtung ungefähr bis in Höhe der oberen Enden der Kolben 23 erstreckt, wenn diese ihre in Richtung des jeweiligen Pumpraums 25 vorgeschobene Stellung einnehmen. In den Ölsumpf 58 taucht ein Ölförderrohr 60 ein, das eine Förderverbindung bereitstellt zwischen dem Ölsumpf 58 und dem Innenraum des topfförmigen Mittelteils 45 des Planetenträgers 41, so dass Öl aus dem Ölsumpf 58 über das Ölförderrohr 60 zum Sonnenrad 32 gefördert werden kann, über das das Öl im gesamten Planetengetriebe 31 verteilt werden kann.

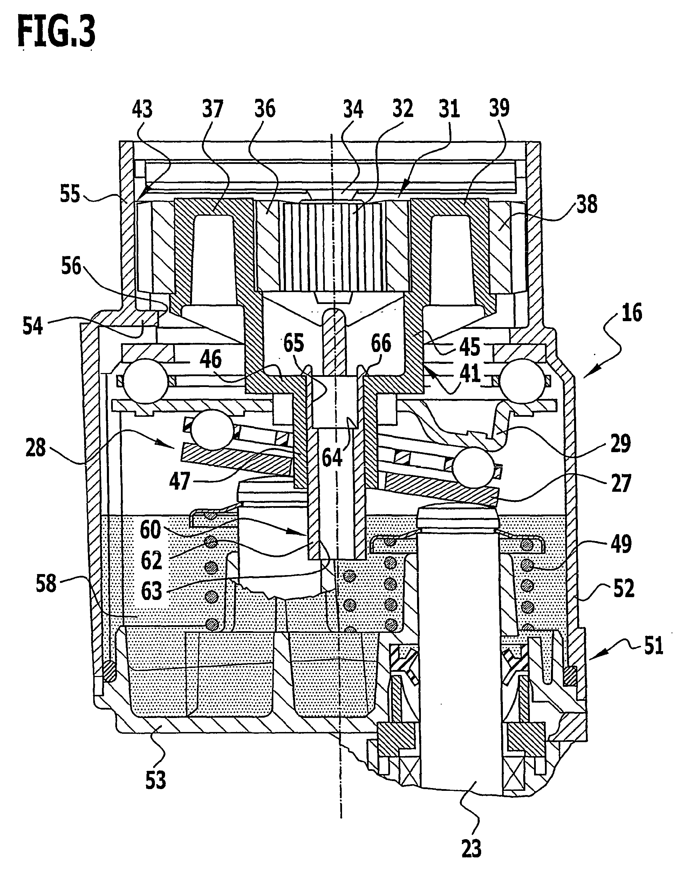

Bei der in Figur 3 dargestellten Ausführungsform der Erfindung wird das Ölförderrohr 60 von einer Hülse 62 ausgebildet, die in den Hohlzapfen 47 des Planetenträgers 41 eingesetzt, mit dem Mittelteil 45 verrastet und kolinear zur Längsachse 24 ausgerichtet ist. Die Hülse 62 weist einen dem Ölsumpf 58 zugewandten unteren Längsabschnitt 53 auf, der über eine radial nach außen gerichtete Stufe 64 in einen oberen Längsabschnitt 65 übergeht, wobei der untere Längsabschnitt 63 einen geringeren Innendurchmesser aufweist als der obere Längsabschnitt 65. Das in den unteren Längsabschnitt 63 eindringende Öl aus dem Ölsumpf 58 unterliegt innerhalb des unteren Längsabschnittes 63 Kapillarkräften, so dass es nach oben gezogen wird in Richtung des oberen Längsabschnittes 65. Zusätzlich unterliegt das Öl während des Betriebes des Hochdruckreinigungsgerätes 10 aufgrund der Drehbewegung der Hülse 62 Zentrifugalkräften, durch die das Öl an die Innenwand der Hülse 62 gedrückt wird, wodurch die Kapillarkräfte unterstützt werden. Dies hat insgesamt zur Folge, dass das Öl durch die Hülse 62 hindurchströmt bis zum Mittelteil 45, von dem es zum Sonnenrad 32 geschleudert wird.

Zur Ausbildung einer Rastverbindung zwischen dem Planetenträger 41 und der Hülse 62 weist letztere auf ihrer dem Ölsumpf 58 abgewandten oberen Stirnseite mehrere Rasthaken 66 auf, die die Bodenwand 46 des Mittelteils 45 hintergreifen.

Der Einsatz der Hülse 62 stellt sicher, dass trotz der praktisch vertikalen Ausrichtung der Motorpumpeneinheit 12 das Planetengetriebe 31 ausreichend mit Öl geschmiert wird.

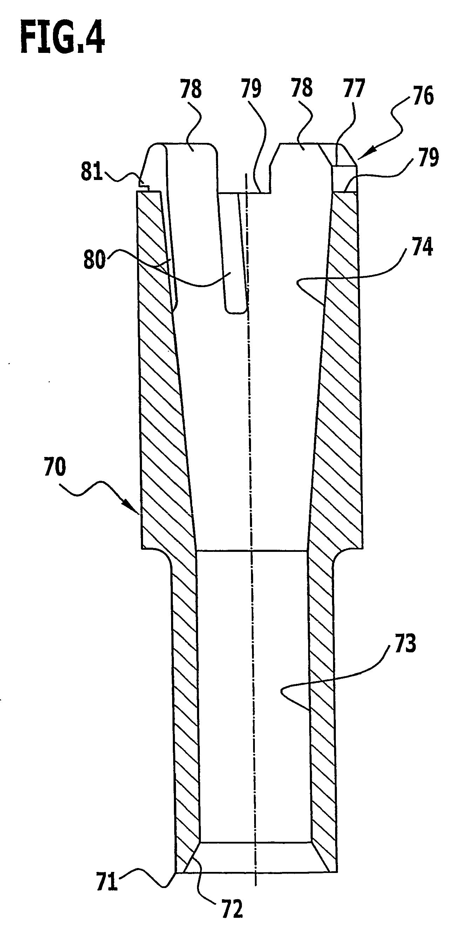

In Figur 4 ist eine alternative Ausgestaltung einer in den Hohlzapfen 47 einsetzbaren und mit dem Mittelteil 45 verrastbaren Hülse dargestellt, die insgesamt mit dem Bezugszeichen 70 belegt ist. Die Hülse 70 weist an ihrem in den Ölsumpf 58 eintauchenden unteren Ende 71 einen sich in die dem Ölsumpf 58 abgewandte Richtung konisch verjüngenden Eintrittsabschnitt 72 auf, an den sich ein Mittelabschnitt 73 mit gleichbleibendem Durchmesser anschließt, an den sich wiederum ein Austrittsabschnitt 74 anschließt, welcher sich in die dem Ölsumpf 58 abgewandte Richtung konisch erweitert. Der Konuswinkel des Austrittsabschnitts 74 beträgt circa 8°, wohingegen der Konuswinkel des Eintrittsabschnitts 72 etwa 50° beträgt. Die Länge des Austrittsabschnitts 74 entspricht etwa der Länge des Mittelabschnittes 73, wohingegen die Länge des Eintrittabschnitts 72 beträchtlich geringer gewählt ist, sie entspricht im Wesentlichen lediglich einem Zehntel der Länge des Austrittsabschnitts 74.

Am oberen Endbereich der Hülse 62 ist eine Ölzerstäubungseinrichtung 76 angeordnet. Diese umfasst mehrere sich einstückig an die obere Stirnseite 77 der Hülse 70 anschließende scharfkantige Zähne 78, die mittels quer zur Längsachse 24 verlaufender und in die obere Stirnseite 77 eingeformter Nuten 79 voneinander getrennt sind. In die Nuten 79 münden Längsschlitze 80 ein, die in die Wandung des Austrittsabschnitts 74 eingeformt sind und sich ungefähr über ein Drittel der Länge des Austrittsabschnitts 74 erstrecken. Die Zähne 78 bilden jeweils einen Rasthaken 81 aus, der die Bodenwand 46 des Mittelteils 45 hintergreift.

Wird die Hülse 70 in den Hohlzapfen 47 des Planetenträgers 41 eingesetzt, so schnappen die Rasthaken 81 in ihre Raststellung ein, wobei die Hülse 70 drehfest mit dem Planetenträger 41 verbunden ist. Die Länge der Hülse 70 ist derart bemessen, dass sie in den Ölsumpf 58 eintaucht. Öl wird aufgrund einwirkender Kapillarkräfte innerhalb der Hülse 62 nach oben gezogen, wobei die Kapillarkräfte durch einwirkende Zentrifugalkräfte unterstützt werden. Im Bereich der Ölzerstäubungseinrichtung 76 wird das hochsteigende Öl in sehr kleine Tröpfchen zerteilt und chaotisch im Mittelteil 45 des Planetenträgers 41 verteilt, wobei ein Teil des Öls auch direkt in Richtung des Sonnenrades 32 geschleudert wird, so dass dieses mit Öl benetzt wird.

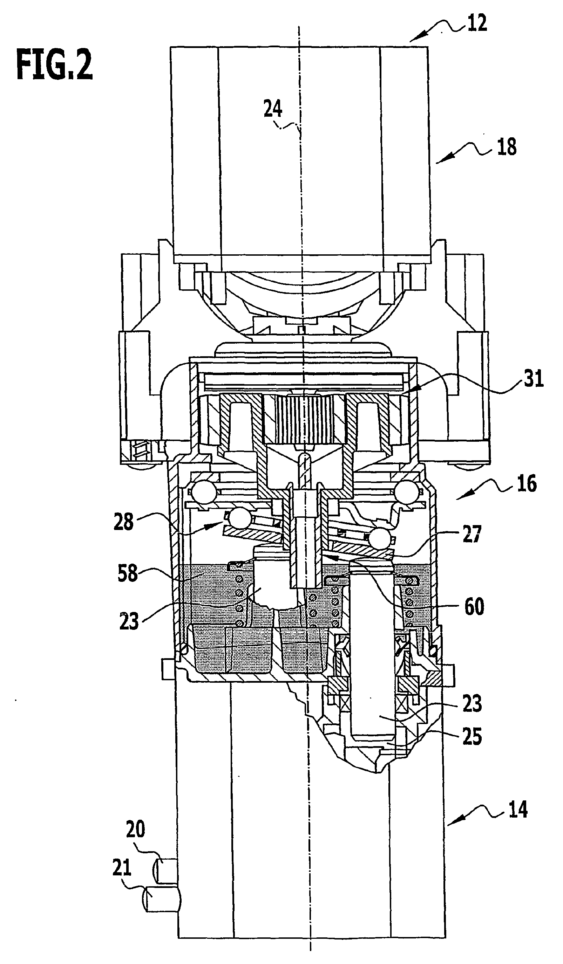

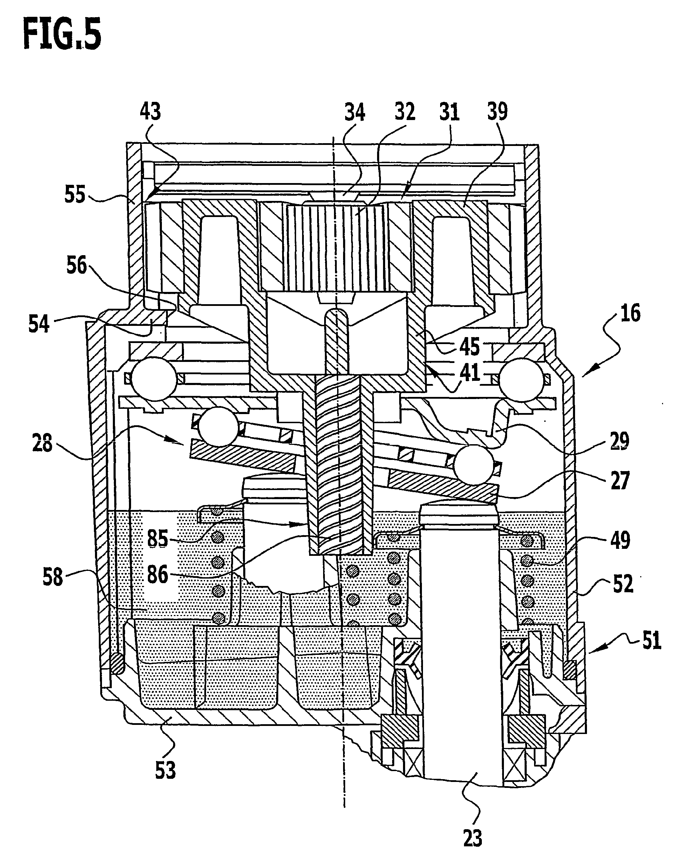

In Figur 5 ist ein Teilschnitt einer weiteren alternativen Ausgestaltung eines erfindungsgemäßen Hochdruckreinigungsgerätes dargestellt, das weitgehend identisch wie das voranstehend beschriebene Hochdruckreinigungsgerät 10 ausgebildet ist. Für identische Bauteile werden daher in Figur 5 dieselben Bezugszeichen verwendet wie in den Figuren 1 bis 3.

Von der in den Figuren 1 bis 3 dargestellten Ausführungsform unterscheidet sich die in Figur 5 dargestellte Ausgestaltung dadurch, dass ein einstückig mit dem Planetenträger 41 verbundenes Ölförderrohr in Form eines Hohlschaftes 85 des Planetenträgers 41 zum Einsatz kommt. Der Hohlschaft 85 taucht in den Ölsumpf 58 ein und weist innenseitig eine Ölfördereinrichtung in Form einer schraubenlinienförmigen Nut 86 auf. Er bildet eine direkte Förderverbindung zwischen dem Ölsumpf 58 und dem Planetengetriebe 31.

Durch Einsatz des Hohlschaftes 85 erstreckt sich der Planetenträger 41 bis in den Ölsumpf 58, so dass Öl direkt in den Planetenträger 41 eindringen und mittels der Ölfördereinrichtung in Form der Nut 86 so weit angehoben werden kann, dass es das Mittelteil 45 des Planetenträgers 41 erreicht, von dem aus es aufgrund der einwirkenden Zentrifugalkräfte innerhalb des Planetengetriebes 31 zuverlässig verteilt wird. Somit kann auch mittels eines einstückig mit dem Planetenträger 41 verbundenen Ölförderrohrs eine zuverlässige Schmierung des Planetengetriebes 31 sichergestellt werden.

## Patentansprüche

1. Hochdruckreinigungsgerät (10) mit einer Motorpumpeneinheit (12), umfassend einen Pumpenkopt (14), auf den ein Kolbenaggregat (16) aufgesetzt ist, auf dem unter Zwischenschaltung eines Planetengetriebes (31) ein Antriebsmotor (18) aufsitzt, wobei das Kolbenaggregat (16) mehrere in Längsrichtung der Motorpumpeneinheit (12) hin und her bewegbare Kolben (23) aufweist, die jeweils in einen Pumpraum (25) des Pumpenkopfes (14) eintauchen, sowie eine Taumelscheibeneinheit (28), die mit den Kolben (23) zusammenwirkt, und wobei das Planetengetriebe (31) ein drehfest mit der Motorwelle (34) des Antriebsmotors (18) verbundenes Sonnenrad (32) aufweist, das über mehrere, an einem Planetenträger (41) drehbar gelagerte Planetenräder (36) mit einem Hohlrad (43) gekoppelt ist, wobei der Planetenträger (36) drehfest mit der Taumelscheibeneinheit verbunden ist, **dadurch gekennzeichnet, dass** das Kolbenaggregat (16) einen Ölsumpf (58) aufweist, in den ein koaxial zur Motorwelle (34) ausgerichtetes Ölförderrohr (60; 85) eintaucht, das drehfest mit dem Planetenträger (41) verbunden ist, wobei Öl aus dem Ölsumpf (58) über das Ölförderrohr (60; 70; 85) dem Planetengetriebe (31) zuführbar ist.

2. Hochdruckreinigungsgerät nach Anspruch 1, **dadurch gekennzeichnet, dass** das Ölförderrohr als Hülse (62; 70) ausgestaltet ist, die in den Planetenträger (41) eingesetzt ist.

3. Hochdruckreinigungsgerät nach Anspruch 2, **dadurch gekennzeichnet, dass** die Hülse (62; 70) mit dem Planetenträger (41) verrastbar ist.

4. Hochdruckreinigungsgerät nach Anspruch 2 oder 3, **dadurch gekennzeichnet, dass** die Hülse (62; 70) in einen Hohlzapfen (47) des Planetenträgers (41) eingesetzt ist.

5. Hochdruckreinigungsgerät nach Anspruch 2, 3 oder 4, **dadurch gekennzeichnet, dass** die Hülse (62; 70) aus Kunststoff gefertigt ist.

6. Hochdruckreinigungsgerät nach einem der voranstehenden Ansprüche, **dadurch gekennzeichnet, dass** sich der Innendurchmesser des Ölförderrohrs (60) in die dem Ölsumpf (58) abgewandte Richtung erweitert.

7. Hochdruckreinigungsgerät nach Anspruch 6, **dadurch gekennzeichnet, dass** sich der Innendurchmesser des Ölförderrohrs (60) zumindest in einem Längsabschnitt (74) konisch erweitert.

8. Hochdruckreinigungsgerät nach einem der voranstehenden Ansprüche, **dadurch gekennzeichnet, dass** das Ölförderrohr (60) an seinem in den Ölsumpf eintauchenden unteren Endbereich einen sich in die dem Ölsumpf (58) abgewandte Richtung konisch verjüngenden Eintrittsabschnitt (72) aufweist.

9. Hochdruckreinigungsgerät nach einem der voranstehenden Ansprüche, **dadurch gekennzeichnet, dass** das Ölförderrohr (60) an seinem dem Ölsumpf (58) abgewandten oberen Endbereich eine Ölzerstäubungseinrichtung (76) aufweist.

10. Hochdruckreinigungsgerät nach Anspruch 9, **dadurch gekennzeichnet, dass** die Ölzerstäubungseinrichtung (76) mehrere von der dem Ölsumpf (58) abgewandten Stirnseite (77) des Ölförderrohrs (60) abstehende Zähne (78) aufweist.

11. Hochdruckreinigungsgerät nach Anspruch 10, **dadurch gekennzeichnet, dass** zumindest ein Zahn (78) ein Rastelement (81) ausbildet, das mit dem Planetenträger (41) zusammenwirkt.

12. Hochdruckreinigungsgerät nach Anspruch 9, 10 oder 11, **dadurch gekennzeichnet, dass** die Ölzerstäubungseinrichtung (76) zumindest einen koaxial zur Längsachse (24) des Ölförderrohrs (60) verlaufenden Schlitz (80) aufweist, der in die dem Ölsumpf (58) abgewandte Stirnseite (77) des Ölförderrohrs (60) einmündet.

13. Hochdruckreinigungsgerät nach einem der Ansprüche 9 bis 12, **dadurch gekennzeichnet, dass** die Ölzerstäubungseinrichtung (76) einstückig mit dem Ölförderrohr (60) verbunden ist.

14. Hochdruckreinigungsgerät nach Anspruch 1 oder einem der Ansprüche 6 bis 13, **dadurch gekennzeichnet, dass** das Ölförderrohr als koaxial zur Motorwelle (34) ausgerichteter und in den Ölsumpf (58) eintauchender Hohlschaft (85) des Planetenträgers (41) ausgestaltet ist.

15. Hochdruckreinigungsgerät nach Anspruch 14, **dadurch gekennzeichnet, dass** der Hohlschaft (85) zumindest eine Fördereinrichtung (86) aufweist für Förderung von Öl aus dem Ölsumpf (58).

16. Hochdruckreinigungsgerät nach Anspruch 15, **dadurch gekennzeichnet, dass** die Fördereinrichtung zumindest eine innenseitig in den Hohlschaft (85) eingeformte schraubenlinienförmige Nut (86) umfasst.

## Claims

1. High-pressure cleaning appliance (10) with a motor-pump unit (12), comprising a pump head (14) on which is positioned a piston subassembly (16), on which a drive motor (18) is seated with the interposition of a planetary gearing (31), the piston subassembly (16) having a plurality of pistons (23) which can be moved back and forth in the longitudinal direction of the motor-pump unit (12) and each penetrate into a pumping chamber (25) of the pump head (14), and also comprising a swash-plate unit (28) which interacts with the pistons (23), and the planetary gearing (31) having a sun gear (32) which is connected in a rotationally fixed manner to the motor shaft (34) of the drive motor (18) and is coupled to a ring gear (43) via a plurality of planet gears (36) rotatably mounted on a planet gear carrier (41), the planet gear carrier (41) being connected in a rotationally fixed manner to the swash-plate unit, **characterized in that** the piston subassembly (16) has an oil sump (58) into which penetrates an oil-delivery tube (60; 85) which is aligned coaxially with the motor shaft (34) and is connected in a rotationally fixed manner to the planet gear carrier (41), it being possible for oil to be fed to the planetary gearing (31) from the oil sump (58) via the oil-delivery tube (60; 70; 85).

2. High-pressure cleaning appliance according to Claim 1, **characterized in that** the oil-delivery tube is configured as a sleeve (62; 70) which is inserted into the planet gear carrier (41).

3. High-pressure cleaning appliance according to Claim 2, **characterized in that** the sleeve (62; 70) can be latched to the planet gear carrier (41).

4. High-pressure cleaning appliance according to Claim 2 or 3, **characterized in that** the sleeve (62; 70) is inserted into a hollow stub (47) of the planet gear carrier (41).

5. High-pressure cleaning appliance according to Claim 2, 3 or 4, **characterized in that** the sleeve (62; 70) is produced from plastics material.

6. High-pressure cleaning appliance according to one of the preceding claims, **characterized in that** the internal diameter of the oil-delivery tube (60) widens in the direction away from the oil sump (58).

7. High-pressure cleaning appliance according to Claim 6, **characterized in that** the internal diameter of the oil-delivery tube (60) widens conically at least in one longitudinal portion (74).

8. High-pressure cleaning appliance according to one of the preceding claims, **characterized in that** at its lower end region, which penetrates into the oil sump, the oil-delivery tube (60) has an entry portion (72) which tapers conically in the direction away from the oil sump (58).

9. High-pressure cleaning appliance according to one of the preceding claims, **characterized in that** at its upper end region, which is directed away from the oil sump (58), the oil-delivery tube (60) has an oil atomizer (76).

10. High-pressure cleaning appliance according to Claim 9, **characterized in that** the oil atomizer (76) has a plurality of teeth (78) which project from the end face (77) of the oil-delivery tube (60), this end face being directed away from the oil sump (58).

11. High-pressure cleaning appliance according to Claim 10, **characterized in that** at least one tooth (78) forms a latching element (81) which interacts with the planet gear carrier (41).

12. High-pressure cleaning appliance according to Claim 9, 10 or 11, **characterized in that** the oil atomizer (76) has at least one slot (80) which runs coaxially with the longitudinal axis (24) of the oil-delivery tube (60) and opens out into the end face (77) of the oil-delivery tube (60), this end face being directed away from the oil sump (58).

13. High-pressure cleaning appliance according to one of Claims 9 to 12, **characterized in that** the oil atomizer (76) is connected integrally to the oil-delivery tube (60).

14. High-pressure cleaning appliance according to Claim 1 or one of Claims 6 to 13, **characterized in that** the oil-delivery tube is configured as a hollow shank (85) of the planet gear carrier (41), this hollow shank being aligned coaxially with the motor shaft (34) and penetrating into the oil sump (58).

15. High-pressure cleaning appliance according to Claim 14, **characterized in that** the hollow shank (85) has at least one delivery device (86) for delivering oil from the oil sump (58).

16. High-pressure cleaning appliance according to Claim 15, **characterized in that** the delivery device comprises at least one helical groove (86) formed on the inside of the hollow shank (85).

## Revendications

1. Appareil de nettoyage à haute pression (10) doté d'une unité formant motopompe (12), ledit appareil comportant une tête de pompe (14) sur laquelle est monté un groupe de pistons (16) sur lequel est monté un moteur d'entraînement (18) en interposant un engrenage planétaire (31), le groupe de pistons (16) comportant plusieurs pistons (23) qui sont aptes à se déplacer suivant un mouvement alternatif dans la direction longitudinale de l'unité formant motopompe (12) et qui pénètrent chacun dans un espace de pompage (25) de la tête de pompe (14), ainsi qu'une unité à plateau oscillant (28) qui coopère avec les pistons (23), et l'engrenage planétaire (31) comportant une roue solaire (32) qui est reliée fixe en rotation à l'arbre (34) du moteur d'entraînement (18) et qui est couplée à une couronne de train planétaire (43) par l'intermédiaire de plusieurs roues planétaires (36) montées à rotation sur une cage de transmission planétaire (41), la cage de transmission planétaire (41) étant reliée fixe en rotation à l'unité à plateau oscillant, **caractérisé en ce que** le groupe de pistons (16) comporte un carter à huile (58) dans lequel pénètre un tube d'alimentation en huile (60 ; 85) qui est orienté coaxialement à l'arbre (34) du moteur et qui est relié fixe en rotation à la cage de transmission planétaire (41), l'huile étant amenée du carter à huile (58) à l'engrenage planétaire (31) par l'intermédiaire du tube d'alimentation en huile (60 ; 70 ; 85).

2. Appareil de nettoyage à haute pression selon la revendication 1, **caractérisé en ce que** le tube d'alimentation en huile est conformé en manchon (62 ; 70) qui est inséré dans la cage de transmission planétaire (41).

3. Appareil de nettoyage à haute pression selon la revendication 2, **caractérisé en ce que** le manchon (62 ; 70) peut être encliqueté avec la cage de transmission planétaire (41).

4. Appareil de nettoyage à haute pression selon la revendication 2 ou 3, **caractérisé en ce que** le manchon (62 ; 70) est inséré dans un tourillon creux (47) de la cage de transmission planétaire (41).

5. Appareil de nettoyage à haute pression selon la revendication 2, 3 ou 4, **caractérisé en ce que** le manchon (62 ; 70) est réalisé en une matière plastique.

6. Appareil de nettoyage à haute pression selon l'une des revendications précédentes, **caractérisé en ce que** le diamètre intérieur du tube d'alimentation en huile (60) s'élargit dans la direction opposée au carter à huile (58).

7. Appareil de nettoyage à haute pression selon la revendication 6, **caractérisé en ce que** le diamètre intérieur du tube d'alimentation en huile (60) s'élargit coniquement au moins sur une portion (74) de sa longueur.

8. Appareil de nettoyage à haute pression selon l'une des revendications précédentes, **caractérisé en ce que** le tube d'alimentation en huile (60) comporte, dans sa région d'extrémité inférieure qui plonge dans le carter à huile, une portion d'entrée (72) qui s'amincit coniquement dans la direction opposée au carter à huile (58).

9. Appareil de nettoyage à haute pression selon l'une des revendications précédentes, **caractérisé en ce que** le tube d'alimentation en huile (60) comporte, dans sa région d'extrémité supérieure opposée au carter à huile (58), un dispositif de pulvérisation d'huile (76).

10. Appareil de nettoyage à haute pression selon la revendication 9, **caractérisé en ce que** le dispositif de pulvérisation d'huile (76) comporte plusieurs dents (78) distantes du côté frontal (77), opposé au carter à huile (58), du tube d'alimentation en huile (60).

11. Appareil de nettoyage à haute pression selon la revendication 10, **caractérisé en ce qu'**au moins une dent (78) forme un élément d'encliquetage (81) qui coopère avec la cage de transmission planétaire (41).

12. Appareil de nettoyage à haute pression selon la revendication 9, 10 ou 11, **caractérisé en ce que** le dispositif de pulvérisation d'huile (76) comporte au moins une fente (80) qui s'étend dans la direction de l'axe longitudinal (24) du tube d'alimentation en huile (60) et qui débouche dans le côté frontal (77), opposé au carter à huile (58), du tube d'alimentation en huile (60).

13. Appareil de nettoyage à haute pression selon l'une des revendications 9 à 12, **caractérisé en ce que** le dispositif de pulvérisation d'huile (76) est relié d'une seule pièce au tube d'alimentation en huile (60).

14. Appareil de nettoyage à haute pression selon la revendication 1 ou l'une des revendications 6 à 13, **caractérisé en ce que** le tube d'alimentation en huile est conformé en une tige creuse (85) faisant partie de la cage de transmission planétaire (41), laquelle tige creuse est agencée coaxialement à l'arbre (34) du moteur et pénètre dans le carter à huile (58).

15. Appareil de nettoyage à haute pression selon la revendication 14, **caractérisé en ce que** la tige creuse (85) comporte au moins un dispositif d'alimentation (86) permettant l'alimentation en huile à partir du carter à huile (58).

16. Appareil de nettoyage à haute pression selon la revendication 15, **caractérisé en ce que** le dispositif d'alimentation comporte au moins une gorge (86) de forme hélicoïdale qui est ménagée dans la surface intérieure de la tige creuse (85).
